# EUROPEAN PATENT APPLICATION

(11) **EP 3 750 976 A1**
(43) Date of publication of application: **16.12.2020**
(21) Application number: 19751929.1
(22) Date of filing: 14.01.2019
(51) Int. Cl.: C10L 5/44, C10B 49/02, B09B 3/00

(54) **INDUSTRIAL COMPLEX FOR THE PRODUCTION OF CHARCOAL**

(30) Priority: 06.02.2018 RU 2018104615
(71) Applicant: OBSHCHESTVO S OGRANICHENNOI OTVETSTVENNOST'YU "PROMETEJ", Irkutskaya oblast, g. Shelekhov, 666036 (RU)
(72) Inventor: PEKAREC, Aleksandr Andreevich, Irkutsk, 664047 (RU)
(74) Representative: Jeck, Anton
(86) International application number: PCT/RU2019/000012
(87) International publication number: WO 2019/156593

(57) **Abstract**

An industrial complex for producing charcoal from briquetted wood waste includes a section for heat carrier preparation, a section for ground wood waste preparation, a wood drying section equipped with a drying device, a briquetting section and a low-temperature pyrolysis section. The section for preparing the gaseous heat carrier is in the form of a heat generator and is equipped with a furnace chamber for receiving combustion gases, a unit for incinerating recovered pyrolysis gases and a unit for introducing the steam-gas mixture returned from the drying section. The section for ground wood waste preparation includes a receiving hopper for the feedstock, crushing and milling equipment and a storage hopper equipped with a batch feeder. The wood drying section is equipped with a drying device that operates in a mode of combined circulation in a suspended state of the steam-gas heat carrier and crushed wood. A section for separating the mixed stream exiting the drying device includes a cyclone and a receiving hopper. The pipeline upstream of the cyclone is equipped with a device for regulating the target moisture of wood particles. The separation section includes a flue for dispersing waste gases from drying. The briquetting section is equipped with an extrusion-type press. The section for low-temperature pyrolysis is equipped with devices for producing charcoal.

## Description

The proposed technical solution relates to the production of charcoal by a waste-free method of low-temperature pyrolysis from a molded waste resulting from forest clearing and wood processing, such as sawdust, wood shavings, bark, wood chips, wood powder, timber offcuts, as well as from off-grade wood, such as branches, pulpwood, and second-growth timber.

The obtained charcoal can be used as an environmentally friendly high-calorie fuel for domestic needs, as well as a reducing agent for chemical, metallurgical, electrode industry, etc. High chemical purity of the obtained coal allows recommending it for use in the cosmetic and pharmaceutical industries.

Currently, the sawdust pyrolysis technology is gaining popularity. The most promising is the pyrolysis technology, which utilizes briquetted feedstock. The calorific value of the crushed wood waste briquettes is comparable to that of bituminous coal: 19 MJ/kg and 22 MJ/kg, respectively. It is also important that in the process of burning wood briquettes, very small amounts of ash and CO₂ gas are formed.

The proposed production Complex (the name is shortened for the sake of simplifying the description) utilizes the technology of rapid low-temperature thermostabilized pyrolysis of the crushed wood waste briquettes. This technology represents a fairly common type of pyrolysis, during which thermal energy is supplied to the pyrolyzed material at a high rate. Thermostabilized low-temperature pyrolysis is carried out at temperatures below 400°C without oxygen.

The following important features should be highlighted with respect to thermostabilized timber pyrolysis:
- possibility of forming a closed-loop continuous technological production process;
- considerable "purity" of the final pyrolytic products, which is achieved due to the absence of the tarring stage;
- low energy consumption compared to other types of pyrolysis;
- large amount of generated thermal energy, since during rapid thermostabilized pyrolysis, exothermic reactions dominate endothermic ones.

In general, wood pyrolysis technologies are quite diverse and can be implemented commercially using various technological equipment. Nevertheless, the majority of such equipment utilized worldwide is completely outdated and does not comply with the existing requirements. In addition, the above-mentioned features of the pyrolysis are not fully realized.

An example of the technology for producing fuel briquettes from crushed wood after preliminary heat treatment is the technology according to US Patent No. 2003/0221363 "Process and apparatus for making a densified torrefied fuel" (C 10 L 5/06, priority date - May 21, 2002). According to the claims, the authors propose two options of the production scheme:
- according to the first option, the scheme includes the following steps:
   - heating biomass to 150-300°C, preferably, to 200-280°C;
   - compacting biomass to produce granules, pellets, or so-called "wood bricks;"
- according to the second option, the scheme includes the following steps:
   - preliminary drying of biomass;
   - crushing biomass to obtain the particle size acceptable for a specifically selected molding device;
   - heating biomass to 150-300°C, preferably, to 200-280°C;
   - compacting biomass to produce granules, pellets, or so-called "wood bricks."

To implement these production schemes, the authors propose to select common technological equipment for each specific production based on the tasks and capabilities of the manufacturer: heating equipment - screw furnaces, fluidized-bed furnaces, rotary furnaces, etc.; pressing equipment - granulators, extruders, etc.

The implementation of both production schemes involves combustion of the return torrefaction (low-temperature thermal decomposition) gases to support the main heat treatment process, i.e., torrefaction. As shown by the authors in Fig. 3, the torrefaction heating device is equipped with two burners: the first burner uses fuel gases and is typically intended for furnace startup; the second burner uses return torrefaction gases and is intended for supporting the torrefaction process during steady operating conditions.

The solution proposed by the above-referenced patent cannot be considered technically sound due to the following main disadvantage: lack of full use of the unique natural property of the plant-based materials - the presence of the bonding organic substances, such as lignin, cellulose, etc. - to produce high-quality (in terms of mechanical strength, moisture resistance, etc.) briquettes. At 200-280°C, these substances undergo an irreversible decomposition, which complicates the subsequent formation of durable granules, pellets, or briquettes.

The closest to the proposed solution in terms of the technical substance (relative to the objective and technological methods for achieving it) is the invention according to Eurasian application No. 201300619 "System for producing granulated heat-treated biofuel" (C 10 L 5/44, applicant: Tambov State Technical University, application date: April 26, 2013). This application is selected as a prototype.

According to the prototype, an industrial system for producing heat-treated molded biomass-based fuel generally includes technological methods, which are traditional for this area and can be implemented using respective common technological equipment.

The System employs the following technological equipment:
- a device for drying biomass, such as a drum dryer;
- a device for preparing biomass for granulation, such as a hammer mill;
- a device for granulating biomass, which can be embodied, for example, in the form of a press with a matrix equipped with dies of a certain diameter and length, as well as rollers, which can be rolled over the matrix to push the biomass through the matrix dies, while compacting it enough to form granules of the required diameter and density;
- a device for cooling granules embodied, for example, in the form of inclined trays for moving the cooled material against the flow of cooling air. Such device can be installed either downstream of the granulator, or downstream of the granule heat-treatment reactor in the process train;
- a device for separating small particles, such as a screen. Such device is installed downstream of each granule-cooling device. Furthermore, small particles collected inside the box under the screen can be returned by pneumatic transport to the granulation device for re-granulation;
- a reactor for heat treatment of granular biomass, embodied in the form of a vertical multisection furnace, within which the biomass is transported using horizontal stirrer blades mounted on the vertical shaft along the longitudinal axis of the reactor. The reactor is heated by an intermediate heating agent, for example, thermal oil, which, in turn, is heated inside a furnace used to produce thermal energy required for heat treatment of the granules. Inside the rector, the granules are subjected to annealing, which results in the removal of moisture, as well as partial removal of oxygen and hydrogen;
- a furnace for generating thermal energy required for heat treatment of the granular biomass, which is embodied, for example, in the form of a boiler, which heats the high-temperature heating agent, such as thermal oil, used for indirect heating of the reactor.

The prototype System includes the following technological methods:
- feedstock moisture content reduction by drying;
- crushing of dried biomass;
- shaping biomass into cubic or cylindrical granules. To exclude spilling of the crushed biomass through the dies instead of being compacted, the moisture content of the biomass entering the press should be at least 8%, and not more than 14%. In case of very low moisture content of the biomass (less than 8%), the latter is subjected to humidification by introducing water or steam into a special device provided on the press;
- cooling granules from 100-110°C to 45-50°C after granulation, and cooling heat-treated granules from 150-300°C to 45-50°C after low-temperature pyrolysis;
- screening both heat-treated granules and granules awaiting heat treatment;
- heat treatment of granules inside the reactor, which represents a low-temperature pyrolysis at 150-300°C, and preferably, at 200-280°C.

The prototype system has a number of significant disadvantages, both from the standpoint of adaptability of the utilized production devices, and their energy efficiency, which implies the energy efficiency of the System as a whole. In this case, the assortment of the marketable products is limited to the production of only small granules, the household demand for which is lower compared to "wood bricks."

The main disadvantages of the System are caused, first of all, by the use of completely outdated process equipment that does not meet the current requirements. This relates to drum dryers, as well as vertical multisection reactors. The use of such outdated pieces of process equipment as key components of the System is the reason for the development of energy-intensive, technologically imperfect, low-productivity industrial line (System) according to the prototype.

The disadvantages of the System based on specific process stages are analyzed below:
- drum furnace as a drying device:
   - there are stringent requirements with respect to the coarseness of crushed wood supplied for drying. This is due to the fact that drying of sawdust having targeted (from the granulation standpoint) particle size of not more than 4 mm upsets the kinetics of the gaseous heating agent in the working space of the drum furnace as a result of formation of a stable dispersed suspension, which prevents effective heat transfer. Therefore, traditionally, the granules are produced by drying coarser fractions of sawdust with subsequent re-grinding. Direct grinding of sawdust depends on the moisture content thereof. Therefore, sawdust is typically subjected to excessive drying to achieve a moisture content of less than 8%, which required additional humidification of the ground sawdust before pressing inside a granulator, which operates effectively in the moisture content range of 8-14%, as noted above;
- reactor for heat treatment of granular biomass in the form of a vertical multisection furnace:
   - low-temperature pyrolysis is performed while the granules are dynamically mixed as a result of flowing from top down and from one section to another. In this case, the mechanical strength of the granules can be reduced, yielding both commercial-quality granules and wood fines, resulting from the destroyed granules, at the reactor exit. These pyrolyzed fines are returned to the granulation, which negatively affects the quality of future granules in terms of their mechanical strength;
   - the reactor is heated by an intermediate heating agent heated in a separate furnace, which represents an additional expenditure item in the energy balance of the System as a whole;
   - the reactor operates by indirect heating of the working volume. Energy transfer by convection is known to be less efficient and less intense;
- in the process of granulation of the biomass, which has been dried in a rotary furnace, a certain amount of spillage is produced, which must be separated prior to pyrolysis. For this purpose, the granules are cooled from 100-110°C to 45-50°C and screened. The heat lost during this process is another unproductive energy expenditure item.

Thus, the "System for producing granulated heat-treated biofuel" according to the prototype has significant disadvantages, such as:
- low process parameters for individual process stages and, hence, for the System as a whole;
- high energy consumption for individual process stages and, hence, for the System as a whole;
- use of excessive number of auxiliary technological equipment, including a boiler for heating high-temperature heating agent, such as thermal oil, used for indirect heating of the reactor;
- restriction of the assortment of produced fuel in terms of geometric dimensions (typically, cylindrical granules measuring 4 to 10 mm in diameter and 1 to 5-5.5 cm in length).

The technical objective of the proposed technical solution is to create a modern industrial charcoal production complex, equipped with advanced high-performance original technological equipment to ensure the implementation of a waste-free method of thermostabilized low-temperature pyrolysis of wood waste briquettes. Such complex is characterized by high adaptability and low energy consumption. A reduction in energy consumption is achieved by burning process gases resulting from the pyrolysis, as well as by recycling flue gases after the drying process. Furthermore, the proposed Complex is very simple in terms of hardware configuration related to auxiliary equipment, and can be assembled on any commercial site, including direct assembly at the logging sites. This complex is mainly intended for the production of larger-sized charred briquettes (so-called "wood bricks") measuring 8 to 10 cm in diameter and 70 to 80 cm in length. This does not exclude the possibility of producing granules, if necessary.

The technical result achieved by using the proposed Complex consists in solving the problem of efficiently forming durable briquettes (preferably, large-sized), which are not subject to breaking in the process of subsequent rapid low-temperature pyrolysis, and on the contrary, significantly increase their mechanical strength, while preserving the briquette geometry from the moment of its formation to the moment of burning by a consumer. The resulting briquettes are characterized by high consumer properties, such as environmental friendliness, high calorific value, and, from the standpoint of storage and transportation, hydrophobicity and high mechanical strength.

The technical result is achieved by the fact that in the industrial complex for the production of charcoal from briquetted wood waste, comprising a heating agent preparation section, a crushed wood waste preparation section, a wood drying section equipped with a drying device, a briquetting section, and a low-temperature pyrolysis section, a gaseous heating agent preparation section is embodied in the form of a multipurpose heat generator equipped with a combustion chamber for producing flue gases, a waste pyrolysis gas combustion unit, and a unit for supplementing the generated heating agent with, at least, a portion of the low-oxygen and high-steam content gas-steam mixture returned from the drying section; furthermore, the crushed wood waste preparation section located upstream of the drying section includes at least one feedstock feed hopper, crushing and grinding equipment, and at least one storage hopper located upstream of the inlet channel of the drying device and equipped with a metering feeder; furthermore, the wood drying section is equipped with a drying device operating under the condition of a joined circulation of the suspended gas-steam heating agent and crushed wood within the working zone embodied in the form of a looped channel, while the drying device includes a wood particle input unit, a low-oxygen heating agent input unit, a wood particle removal unit configured to enable a complete removal of the wood particles with the gas-steam flow, or a complete or partial return thereof for an additional drying cycle, wherein said removal unit is configured to prevent oxygen from penetrating into the working zone of the drying device; furthermore, the section for separating a mixed flow exiting the drying device into a gas-steam mixture and crushed wood is configured to recover at least a portion of the gas-steam mixture in the multipurpose heat generator of the gaseous heating agent preparation section and includes at least one cyclone and one feed hopper, placed downstream relative to the drying device, wherein the pipeline upstream of the cyclone is equipped with a means for controlling target moisture content of the wood particles by condensing moisture from the gas-steam flow; furthermore, the separation section also includes a stack for dispersing at least a portion of the flue gases resulting from drying with said stack being provided with control valves and/or dampers, the positioning of which ensures a level of pressure inside the complex that suppresses oxygen from leaking into the system, while allowing at least a portion of flue gases to exit the system; furthermore, the briquetting section is equipped with at least one press, preferably, of extrusion type; furthermore, the thermostabilized low-temperature pyrolysis section is equipped with at least two charcoal production devices, each of which includes a thermally insulated housing provided with a system of gas ducts, wherein the working zone of each device is embodied in the form of a looped channel provided with a gas-permeable recuperator installed inside said looped channel, a heat-resistant fan, and a butterfly damper, while the gas duct system is configured to transport pyrolysis gases to the multipurpose heat generator installed at the gaseous heating agent preparation section; the pyrolysis section is additionally equipped with removable devices for loading and unloading briquettes. Moreover, the means for controlling the target moisture content of the wood particles by condensing moisture from the gas-steam flow can be embodied in the form of a movable sleeve mounted coaxially on the pipeline and configured to move therealong, or in the form of a folding half-sleeve mounted coaxially on the pipeline and configured to move both in the longitudinal and transverse directions relative to the pipeline axis. In addition, the complex is equipped with a systems responsible for tuning and controlling technological processes of drying, briquetting, pyrolysis, as well as heating agent and wood feedstock preparation. The complex is also provided with thermal insulation, while a portion of the pipeline upstream of the cyclone at the mixed flow separation section allows for the adjustment of the amount of thermal insulation.

The technical substance of the proposed technical solution consists in the following. The key process equipment of the Complex, enabling the achievement of the claimed technical result, was developed by the author and allows for a purposeful and fullest implementation of the natural physicochemical properties of wood to produce high-quality briquetted coal with minimized capital, energy, and labor expenses:
- the first piece of equipment is a drying device (RU patent No. 2596683 "Complex for continuous heat treatment of solid fine particles, mainly disperse wood materials, and methods of heat treatment implemented using said complex"). This apparatus facilitates significant physico-chemical transformations of crushed wood. As a result, the sawdust intensively loses moisture, while undergoing additional crushing and activation in order to be fully prepared for subsequent pressing. The productivity of the drying device currently in operation exceeds 3 t/h (dry basis), and can be increased, if necessary.
- the second piece of equipment is a pyrolysis furnace (RU patent No. 2628602 "Wood coal production device"). This furnace facilitates a thermostabilized low-temperature pyrolysis of wood briquettes under the rapid pyrolysis conditions (4-5 hours). In the proposed industrial Complex, the wood coal production device operates continuously with periodic loading and unloading of the replaceable removable devices, in which the briquettes are steadily placed and spaced so that the pyrolysis of all briquettes proceeds uniformly and equally below 400°C, and preferably, at 330-380°C. The heating agent is dynamically present in the form of generated pyrolysis gases, the looped movement of which within the furnace is provided by the gas-permeable recuperator.

The creation and use of the above process devices allowed the author to develop a highly efficient, highly productive industrial Complex for the production of charcoal with high consumer properties. With this Complex, it became possible to greatly minimize the energy costs by utilizing the energy of the resulting pyrolysis gases and at least a portion of the gas-steam phase after drying. The Complex generally operates in a looped energy mode.

It is known that from the process point of view, thermal conversion of the initial crushed wood (biomass) into briquetted charcoal includes a number of successive production stages, which provide a phased physico-chemical conversion of the initial raw dispersed biomass into coal briquettes:
- the first stage is a non-reactive stage of the solid phase (initial biomass), which includes heating and drying, and results in the production of biomass with increased energy potential (activated biomass) and gas-steam phase;
- the second stage represents the first reaction stage of the solid phase resulting in the production of briquetted biomass with increased density (≥ 1 g/cm³);
- the third stage represents the second reaction stage of the solid phase (direct pyrolysis of the solid phase) resulting in the production of charcoal and gaseous pyrolysis phase; and
- the fourth stage represents direct combustion of the gaseous pyrolysis phase.

In the proposed complex, the individual stages of thermal conversion of the initial crushed wood are split between various production units located in the separate process sections:
- the first stage is implemented at the drying section in the form of suspension under circulating conditions inside the drying device designed by the author;
- the second stage is implemented at the briquetting section using extruders;
- the third stage is implemented inside the pyrolysis furnaces designed by the author; and
- the fourth stage is implemented at the gaseous heating agent preparation section.

According to the proposed technical solution, charcoal production is performed by using a method of thermostabilized low-temperature pyrolysis of briquetted biomass with a low moisture content (not exceeding 8%) at a temperature below 400°C without oxygen. As a result, a solid carbon residue is formed, which is shaped as a coal briquette and has mechanical strength that satisfies the long-term storage and transportation requirements, even under higher atmospheric humidity, along with pyrolysis gas. The proposed Complex is characterized by a maximum yield of solid residue (up to 40%) and pyrolysis gas with a minimum degree of dilution, which means that the maximum calorific value can be generated in the multipurpose heat generator burners. In addition, the resulting pyrolysis gas contains almost no tar and burns with blue flame: the absence of tarry substances guarantees stable operation of the gas burners. As noted above, thermostabilized low-temperature pyrolysis makes it possible to avoid biomass tarring, which results in maximizing the charcoal yield.

It is known that pyrolysis of 1 m³ of wood generates 75-90 m³ of non-condensable gases having approximately the following composition:
- carbon dioxide CO₂ (approximately 45-55%),
- carbon monoxide CO (28-32%),
- hydrogen H₂ (1-2%),
- methane CH₄ (8-21 %), and
- other hydrocarbons (1.5-3.0%).

The calorific value of the gaseous products ranges from 3.05 to 15.2 MJ/m³.

Considering the time lag when isolating a certain component of pyrolysis gases, characterized by different calorific values, the author proposes to equip the Complex with at least two pyrolysis furnaces, which provides an over-time equalization of the calorific value of pyrolysis gases supplied for combustion. The optimal number of pyrolyzers is calculated for each specific plant based on its design capacity.

It is known that the yield of coal can be significantly increased by performing catalyst-assisted pyrolysis. For this purpose, the wood is impregnated with aqueous solutions of the catalysts. The most effective of all currently known catalysts is an acid-peroxide catalyst (containing, for example, 2.5% of sulfuric acid and 0.2% of hydrogen peroxide based on the weight of wood) and diammonium phosphate. The catalyst can significantly reduce the temperature of thermal decomposition of wood, speed up this process by several times, and increase the yield of coal by 1.3 to 1.5 times. In addition, fatty acids, esters or triglycerides can be used as catalysts. The yield of charcoal achieved in the proposed Complex without the use of catalysts exceeds the known levels achieved by using catalysts. The high yield of charcoal is caused, firstly, by wood activation in the drying device and, secondly, by the fact that the exothermic thermal decomposition of the briquetted wood thus prepared proceeds actively already at 230°C under the thermostabilized pyrolysis conditions. Therefore, by performing a comparative analysis between the proposed solution and solution according to the prototype based on the above information disclosed in the "Analysis and criticism of the prototype" section (Eurasian application No. 201300619 "System for producing granulated heat-treated biofuel"), while specifying significant disadvantages of the System relative to both design solution and technological flaws resulting therefrom, as well as the "Technical substance of the proposed technical solution" section, it becomes possible to draw an objective and convincing conclusion about the proposed solution meeting the "novelty" criterion of patentability.

As a result of conducted search based on the patent-related and other technical sources of information, no other technical solutions were found that are characterized by a combination of features similar to those of the proposed solution, which would provide similar results upon their implementation. Therefore, it can be concluded that the proposed technical solution meets the "inventive step" criterion of patentability. The distinctive features specified in the claims are not obvious from the prior art, which also supports the compliance with the "inventive step" patentability criterion.

In the proposed technical solution of the industrial complex for the production of charcoal, a new combination of known and unknown features, which differs by the technical substance of the features, as well as the sequence and interconnection thereof, ensures the achievement of the more advanced technical result compared to the prior art.

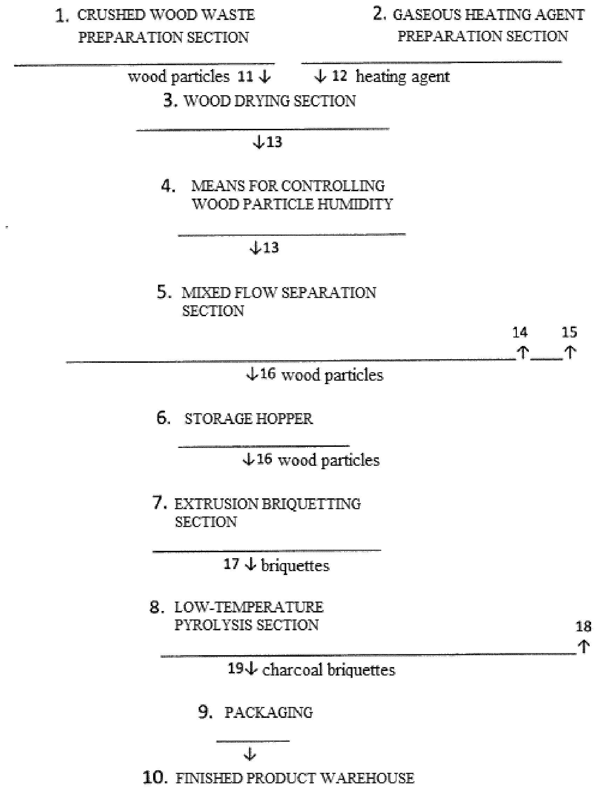

Figure 1 shows a schematic diagram of the industrial complex for the production of charcoal.

The complex depicted in Fig. 1 represents only one of the most preferred configuration options of the proposed solution. However, there could be other design solutions of the Complex, which would enable achieving the claimed technical result. A mandatory requirement for the implementation of the invention is the use of the author-designed thermal units (looped drying device; low-temperature pyrolysis furnace equipped with a powerful gas-permeable recuperator), as well as a closed-loop process gas recycling system as part of the Complex.

According to Fig. 1, the Complex comprises a crushed wood waste preparation section (1) provided with storage, crushing and grinding, and dosing equipment; a gaseous heating agent preparation section (2) equipped with a multipurpose heat generator; a wood drying section (3) equipped with a loop-type drying device; a device for controlling the target moisture content of the wood particles (4), the structural implementation of which may vary (several embodiments are described in the dependent claims 2 and 3 of the invention); a mixed flow separation section (5) equipped with at least one cyclone; a storage hopper (6); an extrusion briquetting section (7); a low-temperature pyrolysis section (8) equipped with at least two low-temperature pyrolysis furnaces; a packaging section (9), which utilizes the original packaging easily distinguishable for a consumer; and a finished product warehouse (10).

The industrial complex depicted in Fig. 1 (schematic diagram) operates as follows.

The initial feedstock (forest clearing and/or wood-processing waste, such as sawdust, shavings, bark, wood chips, wood powder, timber offcuts, as well as from off-grade wood, such as branches, pulpwood, and second-growth timber) is supplied to the crushed wood waste preparation section (1), where wood particles (11) are obtained. Depending on the quality of the waste supplied for processing, a certain type of the crushing and grinding equipment is used, while the only requirement for the wood particles (11) has to do with controlling the maximum permissible size thereof (not to exceed 5 mm). In this case, there is no need to control the fractional composition with respect to the particle sizes less than 5 mm, since the utilized drying device eliminates the initial fluctuations under the conditions of a dynamic weighted looped heat flow. Section (1) contains at least one feed hopper provided with an initial feedstock supply line. The transport line equipped with a metering feeder transfers wood particles (11) from the feed hopper to the drying device of section (3) embodied in the form of a looped channel, preferably with a circular cross-section having the same size over the entire length of the channel.

The gaseous heating agent preparation section (2) is equipped with a multipurpose heat generator operating based on gaseous, as well as solid fuel. Once the Complex reaches the operating conditions, the heat generator generates process heat, which is supplied to the drying unit of section (3) practically without any losses due to recycling of process gases generated during briquette production. The dynamic process gas flows generated during briquette production (pyrolysis gases, gas-steam phase of the drying device) are looped into the multipurpose heat generator of section (2). At the heat generator outlet, a heating agent (12) is obtained, which is supplied to the drying device under the perfect conditions (in terms of temperature, low oxygen content, and high steam content). Moreover, by recycling a gas-steam phase (15), in addition to energy savings it becomes possible to reduce the oxygen content and increase the steam content of the heating agent supplied for drying. Pyrolysis gas (18), generated at the low-temperature pyrolysis section (8), is supplied for combustion inside the multipurpose heat generator, which makes it possible to almost completely satisfy all the heat-related process needs of the production. Thus, recycling of flue/process gases in the multipurpose heat generator provides an efficient preparation of wood particles in section (3), and minimizes the overall energy consumption of the production.

Wood particles (11) and heating agent (12) are supplied to the author-designed drying device of section (3). The looped drying device operates under the repeating cycle conditions within the working channel enabled by the presence of high-capacity fans and a recycling unit, which returns feedstock for repeated heat treatment, both installed within the working channel. The recycling unit is configured to control the volume of recirculating flow inside the channel.

Mixed flow (13), consisting of dried wood particles and gas-steam phase, is supplied as a suspension from the drying device to the transport line equipped with a means (4) for controlling the ultimate moisture content of the wood particles. The design solution of such means may vary, e.g., it can be embodied in accordance with claims 2 or 3 of the invention. The only requirement for this means is of a technological nature, namely: the specified means should allow for the implementation (to a certain degree, depending on the specific requirements) of condensation of a portion of steam from the gas-steam phase to achieve the specified target moisture content of the wood particles (16). This means (4) must be dynamic and capable of simply and quickly changing the amount of thermal insulation of the transport line section where it is installed.

After adjusting the moisture content of the wood particles using means (4), mixed flow (13) is supplied to section (5) for separation. Section (5) is equipped with at least one cyclone configured to separate the gas-steam phase into two flows. One flow (14) is directed through the stack to the atmosphere, and another (15) is returned to the gaseous heating agent preparation section.

According to the diagram shown in Fig. 1, the solid phase in the form of wood particles (16) is supplied from the cyclone of section (5) to the storage hopper (6), and then to the briquetting section (7). In practice, depending on the specific production situation, several options for delivering wood particles (16) to the extruders of section (7) can be implemented, namely: - from the cyclone of section (5) to the storage hopper (6) (as shown in Fig. 1); - from the cyclone of section (5) directly to the extruders of section (7) (not shown in Fig. 1); - from the cyclone, one portion of wood particles (16) is supplied to the storage hopper (6), and another - directly to the extruders of section (7) (not shown in Fig. 1).

The briquetting section (7) is equipped with at least one press, preferably, of an extrusion type. The number of presses in the Complex is determined by the design capacity of the plant. It is more practical to direct briquettes (17) directly to the low-temperature pyrolysis section (8).

At this section (8), briquettes (17) are used to fill the replaceable removable devices carrying briquettes (17) to the author-designed thermostabilized low-temperature pyrolysis furnaces. In the proposed industrial complex, the furnace for producing charcoal operates on a continuous basis with periodic loading and unloading of the replaceable removable devices. The residence time of one batch of briquettes in the furnace does not exceed six hours, and is typically 4-5 hours. The optimal duration of briquette treatment in the furnace is determined by visual inspection of the flue gases (based on the flue gas color). The resulting pyrolysis gas (18) is supplied to the multipurpose heat generator of section (2).

After unloading from the pyrolysis furnace, charred briquettes (19) require no forced cooling. This is due to their stable geometric shape (hollow cylinder). After the briquettes are naturally cooled to ambient temperature, they are supplied to the packaging section (9), where they are packed in the original packaging and dispatched to the warehouse and/or consumer.

All process heating devices within the Complex, as well as transport lines used to transfer the heating agent are thermally insulated.

The above-described operation of the proposed Complex is related to the process dynamics of solid and gaseous products from the moment of wood feedstock delivery to the moment of producing the target charred briquette (19).

From the environmental standpoint, it is important to mention that the proposed production complex operates based on a waste-free technology. Moreover, waste-free production is realized with respect to both the solid part of the feedstock and process gases from the drying section and low-temperature pyrolysis section, formed during the production process.

At this time, the proposed complex for the production of briquetted charcoal has passed pilot plant tests using various initial feedstock. The tests were successful and proved the adaptability of the Complex to any wood waste without changing the process line as a whole.

The tests also showed that the Complex in question is much more effective from the energy standpoint compared to the prior art.

Considering the simplicity and reliability in manufacturing and operation, the proposed Complex can be recommended for widespread implementation into the charcoal production.

## Claims

1. An industrial complex for the production of charcoal from briquetted wood waste, comprising a heating agent preparation section, a crushed wood waste preparation section, a wood drying section equipped with a drying device, a briquetting section, and a low-temperature pyrolysis section, **characterized in that** said gaseous heating agent preparation section is embodied in the form of a multipurpose heat generator equipped with a combustion chamber for producing flue gases, a waste pyrolysis gas combustion unit, and a unit for supplementing the generated heating agent with, at least, a portion of the low-oxygen and high-steam content gas-steam mixture returned from the drying section; furthermore, the crushed wood waste preparation section located upstream of the drying section includes at least one feedstock feed hopper, crushing and grinding equipment, and at least one storage hopper located upstream of the inlet channel of the drying device and equipped with a metering feeder; furthermore, the wood drying section is equipped with a drying device operating under the condition of a joined circulation of the suspended gas-steam heating agent and crushed wood within the working zone embodied in the form of a looped channel, while the drying device includes a wood particle input unit, a low-oxygen heating agent input unit, a wood particle removal unit configured to enable a complete removal of the wood particles with the gas-steam flow, or a complete or partial return thereof for an additional drying cycle, wherein said removal unit is configured to prevent oxygen from penetrating into the working zone of the drying device; furthermore, the section for separating a mixed flow exiting the drying device into a gas-steam mixture and crushed wood is configured to recover at least a portion of the gas-steam mixture in the multipurpose heat generator of the gaseous heating agent preparation section and includes at least one cyclone and one feed hopper, placed downstream relative to the drying device, wherein the pipeline upstream of the cyclone is equipped with a means for controlling target moisture content of the wood particles by condensing moisture from the gas-steam flow; furthermore, the separation section also includes a stack for dispersing at least a portion of the flue gases resulting from drying with said stack being provided with control valves and/or dampers, the positioning of which ensures a level of pressure inside the complex that suppresses oxygen from leaking into the system, while allowing at least a portion of flue gases to exit the system; furthermore, the briquetting section is equipped with at least one press, preferably, of extrusion type; furthermore, the thermostabilized low-temperature pyrolysis section is equipped with at least two charcoal production devices, each of which includes a thermally insulated housing provided with a system of gas ducts, wherein the working zone of each device is embodied in the form of a looped channel provided with a gas-permeable recuperator installed inside said looped channel, a heat-resistant fan, and a butterfly damper, while the gas duct system is configured to transport pyrolysis gases to the multipurpose heat generator installed at the gaseous heating agent preparation section; the pyrolysis section is additionally equipped with removable devices for loading and unloading briquettes.

2. The industrial complex for the production of charcoal from briquetted wood waste according to claim 1, **characterized in that** the means for controlling the target moisture content of the wood particles by condensing moisture from the gas-steam flow is embodied in the form of a movable sleeve mounted coaxially on the pipeline and configured to move therealong.

3. The industrial complex for the production of charcoal from briquetted wood waste according to claim 1, **characterized in that** the means for controlling the target moisture content of the wood particles by condensing moisture from the gas-steam flow is embodied in the form of a folding half-sleeve mounted coaxially on the pipeline and configured to move both in the longitudinal and transverse directions relative to the pipeline axis.

4. The industrial complex for the production of charcoal from briquetted wood waste according to claim 1, **characterized in that** the wood drying section is equipped with a system responsible for tuning and controlling the drying process, including the adjustment of temperature, oxygen content, humidity and volume of heating agent supplied to the drying device; adjustment of the volume and feed rate of crushed wood waste supplied to the drying device; adjustment of the gas-steam heating agent and crushed wood joint circulation rate; adjustment of the pressure level inside the drying device and adjustment of the residence time of the circulating flow of suspended wood particles inside the looped channel.

5. The industrial complex for the production of charcoal from briquetted wood waste according to claim 1, **characterized in that** the briquetting section is equipped with a system responsible for tuning and controlling the briquetting process, including the adjustment of humidity and temperature of the wood particles supplied for extrusion; and adjustment of extrusion temperature and rate.

6. The industrial complex for the production of charcoal from briquetted wood waste according to claim 1, **characterized in that** the low-temperature pyrolysis section is equipped with a system responsible for tuning and controlling the process of thermostabilized pyrolysis, including the adjustment of pyrolysis gas temperature and circulation rate; and adjustment of the volume of pyrolysis gases supplied for combustion at the gaseous heating agent preparation section.

7. The industrial complex for the production of charcoal from briquetted wood waste according to claim 1, **characterized in that** the gaseous heating agent preparation section is equipped with a system responsible for tuning and controlling the heating agent preparation process, including the adjustment of flue gas volume; adjustment of the volume of the return gas-steam flow after drying; and adjustment of the operation of burners for combustion of pyrolysis gases.

8. The industrial complex for the production of charcoal from briquetted wood waste according to claim 1, **characterized in that** the site for the preparation of crushed wood waste is equipped with a system responsible for tuning and controlling the technological process for wood feedstock preparation, including the adjustment and control of the size of wood particles supplied for drying.

9. The industrial complex for the production of charcoal from briquetted wood waste according to claim 1, **characterized in that** said complex is provided with thermal insulation.

10. The industrial complex for the production of charcoal from briquetted wood waste according to claim 9, **characterized in that** the portion of the pipeline upstream of the cyclone at the mixed flow separation section allows for the adjustment of the amount of thermal insulation.
